# EUROPEAN PATENT APPLICATION

(11) **EP 4 040 578 A1**
(43) Date of publication of application: **10.08.2022**
(21) Application number: 20871348.7
(22) Date of filing: 01.10.2020
(51) Int. Cl.: H01M 50/10, H01M 50/147, H01M 50/172, H01M 50/543, H01M 50/60

(54) **BATTERY CELL CASE AND BATTERY MANUFACTURING METHOD USING SAME**

(30) Priority: 03.10.2019 JP 2019182800
(71) Applicant: NIPPON STEEL CORPORATION, Chiyoda-ku Tokyo 100-8071 (JP)
(72) Inventor: TAKAHASHI, Takehiro, Tokyo 100-8071 (JP); KOBAYASHI, Akinobu, Tokyo 100-8071 (JP)
(74) Representative: Vossius & Partner Patentanwälte Rechtsanwälte mbB
(86) International application number: PCT/JP2020/037469
(87) International publication number: WO 2021/066112

(57) **Abstract**

[Problem] To provide a battery cell case with a novel configuration in which the periphery of an opening in a surface which serves as an outer surface of a case lid having the opening is not resin laminated. [Solution] A battery cell case in which a case body and a case lid are joined by seaming or welding, wherein: the case body is made of a resin laminated steel sheet on a surface which serves as the inner surface of the case body; the resin laminate is made of a film of which a polyolefinic resin is the main ingredient; the case lid is made of a metal sheet; the case lid has an opening for releasing a gas generated by electrolyte injection or preliminary charging; and a range of at least 2 mm from the periphery of the opening in the surface which serves as the outer surface of the lid case is not resin laminated.

## Description

### TECHNICAL FIELD

The present invention relates to a battery cell case composed of a case body and a case lid. Specifically, the present invention relates to a battery cell case in which the case lid has an opening for injecting an electrolytic solution or for releasing a gas generated by pre-charging/discharging, and the periphery of the opening in a surface which serves as an outer surface of the case lid is not resin-laminated, and a method for manufacturing a battery using the battery cell case.

### BACKGROUND ART

Currently, among batteries that use a non-aqueous electrolytic solution as an electrolytic solution, such as lithium-ion batteries, square cases are often used for large batteries. Generally, a square case is composed of a lid and a case, a material of which is mainly stainless steel or aluminum, and the lid and the case are assembled by laser welding. However, since the material is expensive and laser welding is time consuming which causes a low productivity, it is desired to replace it with a cheaper material and apply a more productive lid assembly method.

On the other hand, it has been possible in some cases to reduce an amount of aluminum used in order to reduce the cost of case materials, by using aluminum foil laminated with resin, and to seal the case in a short time with resin m (heat seal). However, the case made of such resin-laminated aluminum foil has a low rigidity. Therefore, when the battery expands due to charging/discharging, etc., the sealed part (that is, the fused part) may peel off, and thus there is concern about the sealing property, and it is vulnerable to piercing from the outside, which limit their applications.

On the other hand, laminated steel sheets obtained by laminating a film mainly composed of polyethylene (PE) or polypropylene (PP) on chrome-plated steel sheets are widely used as inexpensive case materials for cases of foods and chemicals, etc. A case made of such a laminated steel sheet can store various contents for a long period of time with suppressing their deterioration by selecting a film suitable for the contents. Additionally, it is possible to assemble the case in a short time by seaming a case lid to a case body and the resulting case can have an even higher strength. Furthermore, if higher sealing property is required, the case lid can be attached to the case body by welding. However, until now, it has not been widely used as a material for a battery case, except in special cases. The reason thereof is considered due to the sealing property of its opening.

For a large battery, after assembling the battery, an electrolytic solution is injected through its opening and the electrolytic solution was permeated into the battery case, and then pre-charging/discharging is performed. After releasing a gas generated at that time to the outside of the case, the opening is often sealed. Sealing is often performed by welding, but it is difficult to close a hole (that is, opening) of the laminated steel sheet by welding, because the laminated steel sheet is laminated with resin. Therefore, a laminated steel sheet has not been widely used as a material for a battery case until now.

### PRIOR ART DOCUMENT

### PATENT DOCUMENT

Patent Document 1: Japanese Unexamined Patent Publication (Kokai) No. 2011-258501
Patent Document 2: Japanese Unexamined Patent Publication (Kokai) No. 2012-018866
Patent Document 3: Japanese Unexamined Patent Publication (Kokai) No. 2012-094374
Patent Document 4: Japanese Unexamined Patent Publication (Kokai) No. 2012-064337

### SUMMARY OF THE INVENTION

### PROBLEMS TO BE SOLVED BY THE INVENTION

Patent Document 1 discloses a method for manufacturing a battery cell case formed by laminating two laminated steel sheets, comprising steps of preparing two laminated steel sheets and superimposing their surfaces to be fused on each other, and of applying heat to the fused portions while bending the periphery of the fused portions to heat-seal the fused portions with each other. According to this method, it is taught that the fusion property between two laminated steel sheets can be improved because the fused portions are not peeled off by bending operation. However, Patent Document 1 does not describe or suggest an opening for injecting an electrolytic solution.

Patent Document 2 discloses a battery cell case and a method for manufacturing the battery cell case, aiming at improving the fusion (heat seal) strength between laminated steel sheets. The case is formed by superimposing flange portions of a pair of laminated steel sheets having a drawn portion. The respective flange portions have ribs, and the ribs are engaged with each other and heat-sealed. As a result, it is taught that the heat seal strength is improved. However, Patent Document 2 does not describe or suggest an opening for injecting an electrolytic solution.

Patent Document 3 discloses a battery exterior material (case) made of a laminated steel sheet, and a method for manufacturing the exterior material. The exterior material comprises tabs (drawing terminals of a positive electrode and a negative electrode), and a stepped portion matched to the cross-sectional shape of the tab is preliminarily formed on the exterior material (laminated steel sheet) so that the tab can be pulled out from an interior of the exterior material. It is taught that this makes it possible to avoid formation of a gap between the exterior material and the tab to ensure a sealing property of the battery case more reliably. However, Patent Document 3 does not describe or suggest an opening for injecting an electrolytic solution.

Patent Document 4 relates to a sealed storage battery. The storage battery includes a metallic exterior body having a flange portion and a metal sheet (which corresponds to a laminated steel sheet) fused to one surface of the flange portion via a resin film. The metal sheet protrudes to the outside of the flange portion, and the protruded portion is folded back to the other surface of the flange portion and fused via the resin film. As a result, it is disclosed that the battery can be sealed so as not to be broken by a stress caused by gas generation within the battery. Further, Patent Although Document 4 discloses that the exterior body is sealed with the metal sheet after an electrolytic solution is injected into the exterior body. However, it does not describe or suggest that the metal sheet has an opening.

As described above, various studies have been conducted on battery cell cases using laminated steel sheets. However, in a practical battery manufacturing process, an opening is indispensable for injecting an electrolytic solution and releasing a gas generated during pre-charging / discharging. However, sufficient studies have not been made on sealing property of the opening.

Therefore, the purpose of the present invention to provides a battery cell case with a novel configuration in which the periphery of an opening in a surface which serves as an outer surface of a case lid having the opening is not resin-laminated, and a method for manufacturing a battery using the same. As a result, the opening can be easily sealed by welding, and the case lid can be used as at least a part of a terminal of a positive electrode or a negative electrode.

### MEANS FOR SOLVING THE PROBLEMS

The present invention provides the following aspects.

[1] Abattery cell case in which a case body and a case lid are joined by seaming or welding,
   wherein the case body is made of a resin laminated steel sheet on a surface which serves as an inner surface of the case body,
   the resin laminate is made of a film of which a polyolefinic resin is the main ingredient,
   the case lid is made of a metal sheet,
   the case lid has an opening for injecting an electrolytic solution or for releasing a gas generated by pre-charging/discharging; and
   a range of at least 2 mm from the periphery of the opening in a surface which serves as an outer surface of the case lid is not resin laminated.
[2] The battery cell case according to item [1], wherein the steel sheet of the case body is a material based on a surface-treated steel sheet that has been subjected to a plating containing at least one of Al, Cr, Ni, Sn, Zn and Zr and/or a chemical conversion treatment containing at least one of Si, V, Ti, Zr, P and Cr, and the metal sheet of the case lid is a material based on any of a Ni-plated steel sheet, a stainless steel sheet or an aluminum sheet.
[3] The battery cell case according to item [1] or [2], wherein the opening has a diameter of 0.5 mm or more and 10 mm or less.
[4] The battery cell case according to any one of items [1] to [3], wherein the case lid has a terminal hole for a positive electrode terminal and a terminal hole for a negative electrode terminal in addition to the opening.
[5] The battery cell case according to any one of items [1] to [3], wherein the metal sheet of the case lid is a material based on either a Ni-plated steel sheet or a stainless steel sheet, and
   the case lid has a terminal hole for a positive electrode terminal in addition to the opening.
[6] The battery cell case according to any one of items [1] to [3], wherein the metal sheet of the case lid is a material based on either a stainless steel sheet or an aluminum sheet, and
   the case lid has a terminal hole for a negative electrode terminal in addition to the opening.
[7] The battery cell case according to any one of items [1] to [4], wherein a film containing a polyolefinic resin as the main ingredient is laminated on the surface which serves as the inner surface of the case lid.
[8] The battery cell case according to any one of items [1] to [7], wherein the opening is closed and sealed by welding.
[9] A method for manufacturing a battery using the battery cell case according to any one of items [1] to [8], comprising the following steps:
   inserting a battery element into the case body;
   joining the case body and the case lid by seaming or welding;
   injecting an electrolytic solution through the opening; and
   electrolyzing and gasifying water in the electrolytic solution by pre-charging/discharging and releasing the water from the battery cell case; and
   sealing the metal lid to the opening by welding.

### THE EFFECT OF THE INVENTION

According to the present invention, a battery cell case in which the periphery of an opening in a surface which serves as an outer surface of a case lid having the opening is not resin-laminated, and a method for manufacturing a battery using the same are provided. As a result, it is possible that the opening can be easily sealed by welding, and the case lid can be used as at least a part of a terminal of a positive electrode or a negative electrode.

### BRIEF EXPLANATION OF DRAWINGS

[FIG. 1]

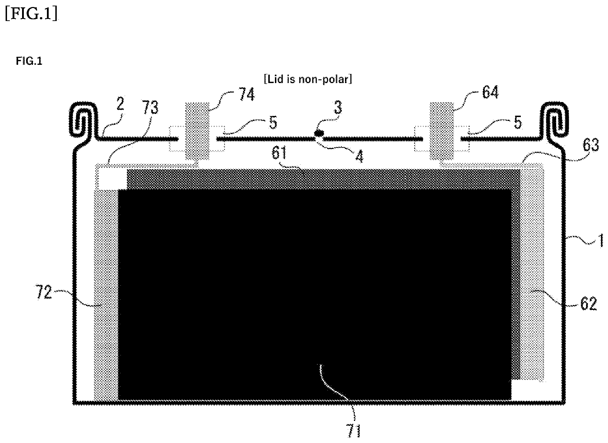

   FIG. 1 is a schematic view of a battery cell case (a case lid is non-polar), according to one aspect of the present invention.
[FIG. 2]

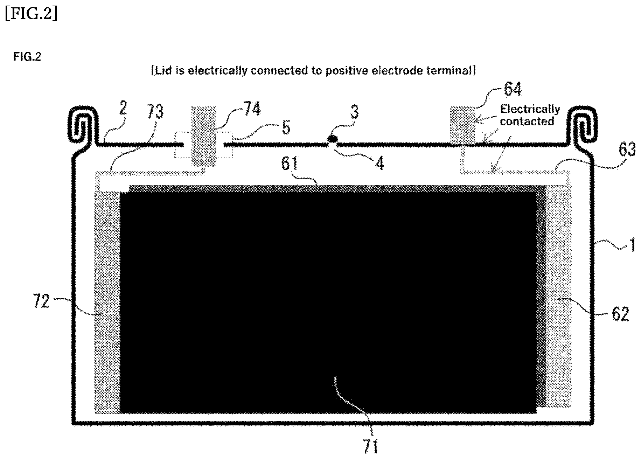

   FIG. 2 is a schematic view of a battery cell case (a case lid is electrically connected to a positive electrode terminal), according to one aspect of the present invention.
[FIG. 3]

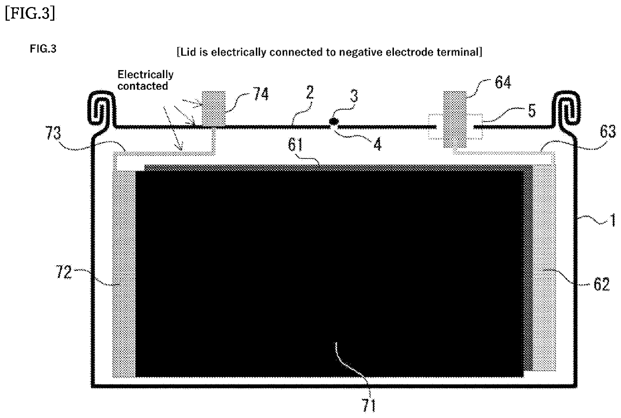

   FIG. 3 is a schematic view of a battery cell case (a case lid is electrically connected to a negative electrode terminal), according to one aspect of the present invention.
[FIG. 4]

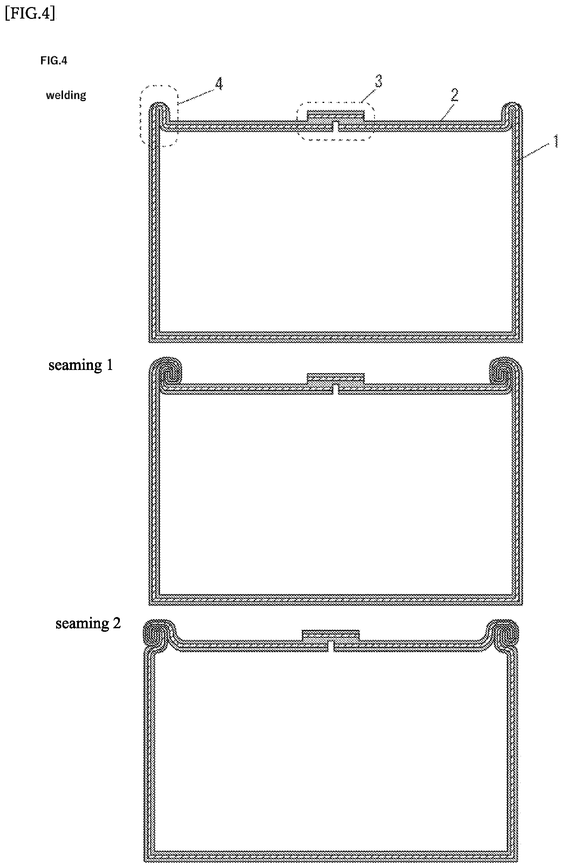

   FIG. 4 is a schematic view of a battery cell case, according to one aspect of the reference invention.
[FIG. 5]

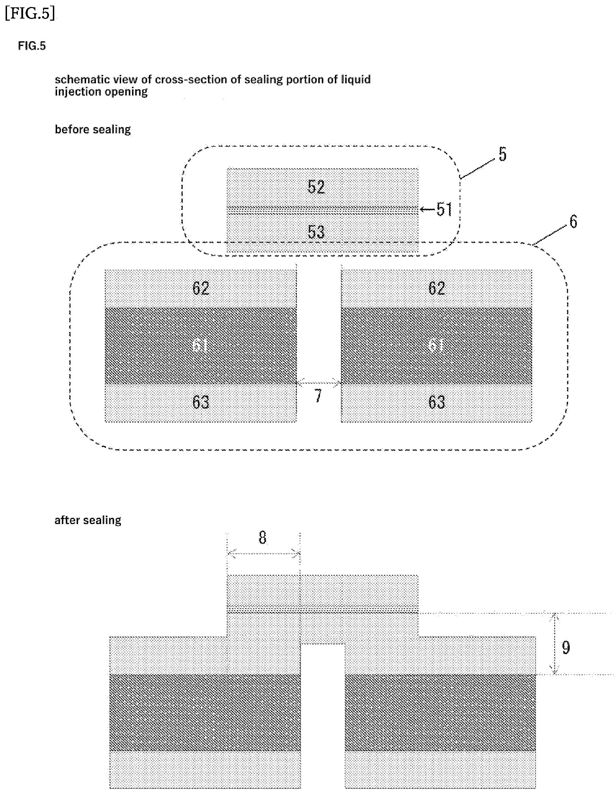

   FIG. 5 is an enlarged schematic view of the opening of FIG. 4 before and after sealing.

### EMBODIMENTS FOR CARRYING OUT THE INVENTION

FIGS. 1 to 3 show a schematic view of a battery cell case, according to one aspect of the present invention. The battery cell case is configured by joining the case body and the case lid by welding or seaming (caulking). In order to reduce material waste, it is preferable to join the edge portions of the case body and the case lid.

The case body is composed of a resin laminated steel sheet on a surface which serves as the inner surface of the case body (that is, the inner surface when the battery cell case is produced).

The steel sheet as a base material for the resin-laminated steel sheet may be appropriately selected as long as it does not cause problems in plating property, weldability, and adhesion to the resin laminate. The type of steel sheet may be selected so that appropriate corrosion resistance can be obtained depending on the electrolytic solution of the battery, the usage environment, and the like. Since corrosion resistance and case strength can be ensured depending on the thickness of the steel sheet, a steel sheet having a good cost performance may be used. As the steel sheet, in addition to stainless steel, pure iron, carbon steel, low alloy steel, zirconium, vanadium, aluminum, aluminum iron alloy, zinc copper alloy and the like may be adopted. The thickness of the steel sheet can be appropriately selected. For example, the thickness of the steel sheet may be 0.05 mm or more, preferably 0.1 mm or more, 1.2 mm or less, and preferably 1.0 mm or less. This is because if it is too thin, sufficient strength as a battery cell case may not be obtained, and if it is too thick, workability is lowered and the cost is increased.

The steel sheet may be a plated steel sheet. As for the type of plating, the type of plating may be selected so as to obtain appropriate corrosion resistance depending on an electrolytic solution of the battery, usage environment, and the like, as long as the adhesion to the resin laminate is not affected. For example, the plating may contain one or more kinds of elements from Al, Cr, Ni, Sn, Zn and Zr. Plating containing these elements can be obtained by a conventional method. In plating containing a plurality of elements, the plating element may be plated in one or more states of an alloy layer, a layered state, and a partially granular and partial layered state. From the viewpoint of adhesion to the resin laminate, corrosion resistance, availability, etc., the plating may be a tin-free steel (TFS) having a chromium oxide layer and a metallic chromium layer, a nickel plating such as one having a nickel layer, or a nickel layer and a nickel-iron alloy layer, a tin plating such as one having a tin layer or a tin layer and a tin-iron alloy layer.

The plating amount may be appropriately selected so as to obtain appropriate corrosion resistance depending on an electrolytic solution of the battery, usage environment, etc., and may be in the range of 5 mg/m² to 5 g/m². If it is no more than 5 mg/m², the plating cannot adhere to the whole area, and the adhesion to the resin laminate and the electrolytic solution resistance may be easily deteriorated. If it is no less than 5 g/m², cracks may occur in the plating during processing, which may cause a decrease in peel strength and the like.

There may be several types of plating baths for plating, but the performance is exhibited regardless of the plating bath. In addition to electroplating, the plating method may be thermal spraying, vapor deposition, or hot-dip plating.

In order to further improve properties such as the adhesion of the resin laminate to the steel sheet, processing adhesion and corrosion resistance, the steel sheet may be subjected to a known chemical conversion treatment. The chemical conversion treatment in this case is not particularly limited, and a known treatment can be applied, and may be a silica-based chemical conversion treatment, a chromate-based chemical conversion treatment, or the like. For example, a silane coupling agent may be used, and in the case of an inorganic chemical conversion treatment film layer, one, two or more selected from silica fine particles, vanadium compounds, titanium compounds, zirconium compounds, phosphoric acid compounds, chromium oxides and the like is exemplified. The chromium oxide may contain chromium of any valence, and may contain, for example, trivalent chromium and/or hexavalent chromium.

The silane coupling agent is not particularly limited, and an appropriate silane coupling agent may be selected in consideration of adhesion to the resin to be laminated. For example, vinyl trimethoxysilane, vinyl triethoxysilane, γ-aminopropyltrimethoxysilane, γ-aminopropylethoxysilane, N-[2- (vinylbenzylamino) ethyl] -3-aminopropyltrimethoxysilane, γ-methacryloxypropylmethyldimethoxysilane, γ-methacryloxypropyltrimethoxysilane, γ-methacryloxypropylmethyldiethoxysilane, γ-methacryloxypropyltriethoxysilane, γ-glycidoxypropyltriethoxysilane, γ-glycidoxypropylmethyldiethoxysilane, γ-glycidoxypropyltrimethoxysilane, 2- (3,4-epoxycyclohexyl) ethyltrimethoxysilane, N-6 (aminoethyl) γ-aminopropyltrimethoxysilane, N-β- (aminoethyl) -γ-aminopropyltriethoxysilane , N-β- (aminoethyl) -γ-aminopropylmethyldimethoxysilane, N-phenyl-γ-aminopropyltrimethoxysilane, γ-mercaptopropyltrimethoxysilane and the like can be mentioned. The silane coupling agent may be used alone or in combination of two or more.

There are two types of silica fine particles, that is, liquid phase silica and vapor phase silica, and either of these may be used. Examples of the vanadium compound include, but are not limited to, ammonium vanadate, ammonium metavanadate, and the like.

Examples of the titanium compound include, but are not limited to, Ti alkoxide, basic Ti carbonate, Ti fluoride, Ti-containing organic chelate, and Ti-containing coupling agent (Ti alkoxide compound to which an organic functional group such as epoxy group, vinyl group, amino group and methacryloxy group is bonded) and the like.

Examples of the zirconium compound include, but are not limited to, Zr alkoxide, basic Zr carbonate, Zr fluoride, and Zr-containing organic chelate.

Examples of the phosphoric acid compound include, but are not limited to, orthophosphoric acid, pyrophosphoric acid, and polyphosphoric acid.

In the case of chromium oxide treatment, various chromate treatments such as electrolytic chromate and resin chromate, and other chromate-free chemical conversion treatments may be performed. When the steel sheet is a tin-free steel that has already been subjected to a chromium-containing surface treatment, the adhesion of the resin laminate to the steel sheet, processing adhesion, and electrolytic solution resistance are as good as those of the metal surface that has been subject to various chromate treatments.

The adhered amount of the chemical conversion coating film layer with respect to the chemical conversion coating film layer below the outermost layer, that is, the chemical conversion coating film layer used for the front surface may be 20 mg/m² or more and 1000 mg/m² or less, in order to ensure good adhesion and corrosion resistance. If the adhered amount is excessively small, the chemical conversion treatment coating film may not be sufficiently present on the surface of the steel sheet, and the adhesion to the resin laminate may not be sufficient. On the other hand, if the adhered amount is excessively large, the chemical conversion coating film itself may be coagulated and broken, and it causes the high cost.

Before the chemical conversion treatment, a scale removal treatment may be performed as a base treatment. Examples of the scale removing treatment method include pickling, sandblasting, and grid blasting. After pickling or sandblasting, an additional base treatment using chromate treatment or chromate-free treatment, strike plating and epoxy primer treatment is preferable from the viewpoint of strengthening the chemical adhesion between the laminated resin and the steel sheet.

In addition to the above, the chemical conversion treatment layer can contain various rust preventives, pigments, inorganic compounds, and organic compounds.

The method for forming the chemical conversion treatment layer is not particularly limited, and known methods such as coating and baking can be applied without limitation.

In particular, the steel sheet of the case body may be a surface-treated steel sheet that has been treated to contain at least one of Cr, Si and Zr. The steel sheet subjected to these treatments is preferable because it has excellent adhesion to the polyolefinic resin laminate.

The resin-laminated steel sheet is a steel sheet that serves as a base material to which a resin is laminated. The resin laminate on the inner surface of the case body is composed of a film containing a polyolefinic resin as the main ingredient. Since the polyolefinic resin has an electrolytic solution resistance, it is suitable for an inner surface resin of a battery cell case, and can also serve as a resin for fusion (heat sealing) at the seamed portion with a case lid or the like.

The polyolefinic resin is a resin having the following repeating unit (Formula 1). The fact that the resin is the main ingredient means that the resin having the repeating unit of (Formula 1) constitutes 50% by mass or more.

-CR¹H-CR²R³- (Formula 1)

wherein R¹ and R² each independently represents an alkyl group having 1 to 12 carbon atoms or hydrogen, and R³ represents an alkyl group having 1 to 12 carbon atoms, aryl group or hydrogen in Formula 1.

The polyolefinic resin may be a homopolymer of the above-mentioned structural unit or a copolymer of two or more types. It is preferable that 5 or more repeating units are chemically bonded. If the number is less than 5, it may be difficult to exert a polymeric effect (for example, flexibility, extensibility, etc.).

Examples of the repeating unit include repeating units obtained upon addition polymerization of terminal olefins such as ethylene, propene (propylene), 1-butene, 1-pentene, 4-methyl-1-pentene, 1-hexene, 1-octene, 1-decene and 1-dodecene, repeating units obtained upon addition polymerization of aliphatic olefins such as isobutene, and repeating units obtained upon addition polymerization of aromatic olefins such as styrene monomer, as well as alkylated styrene such as o-methylstyrene, m-methylstyrene, p-methylstyrene, o-ethylstyrene, m-ethyl styrene, o-ethyl styrene, o-t-butyl styrene, m-t-butyl styrene, p-t-butyl styrene, halogenated styrene such as monochlorostyrene, styrenic monomer such as terminal methyl styrene.

Examples of homopolymers having such a repeating unit include homopolymers of terminal olefins such as low-density polyethylene, medium-density polyethylene, high-density polyethylene, linear low-density polyethylene, crosslinked polyethylene, polypropylene, polybutene, polypentene, polyhexene, polyoctenylene, polyisoprene, polybutadiene and the like. Further, copolymers of the above repeating unit, include aliphatic polyolefins such as an ethylene-propylene copolymer, an ethylene-butene copolymer, an ethylene-propylene-hexadiene copolymer, and an ethylene-propylene-5-ethylidene-2-norbornene copolymer, and aromatic polyolefins such as styrenic copolymers, but the present invention is not limited to these, as long as the conditions of the above repeating units are satisfied. Further, it may be a block copolymer or a random copolymer. Moreover, these resins may be used individually or in a mixture of 2 or more types.

Further, the polyolefin used in the present invention may contain the above-mentioned olefin unit as the main ingredient, and vinyl monomer, polar vinyl monomer, and diene monomer, which are a substituent of the above-mentioned unit, may be copolymerized in a monomer unit or a resin unit. The copolymer composition is 50% by mass or less, and preferably 30% by mass or less, based on the above olefin unit. If it exceeds 50% by mass, the properties of the olefin resin such as the barrier property against a corrosion-causing substance may deteriorate.

Examples of the polar vinyl monomer include acrylic acid and acrylic acid derivatives such as methyl acrylate and ethyl acrylate, methacrylic acid and methacrylic acid derivatives such as methyl methacrylate and ethyl methacrylate, acrylonitrile, maleic anhydride and imide derivatives of maleic anhydride, vinyl chloride and the like.

The most preferable resin from the viewpoint of handleability and barrier property against a corrosion-causing substance are low-density polyethylene, medium-density polyethylene, high-density polyethylene, linear low-density polyethylene, crosslinked polyethylene, polypropylene, or a mixture of two or more of these.

As the resin laminate used in the present invention, a film containing polyethylene or polypropylene as the main ingredient is more suitable from the viewpoint of cost, distribution, ease of fusion, and the like.

Here, the resin containing a polyolefinic resin as the main ingredient means a resin containing 50% by mass or more of the polyolefinic resin, and in addition to the pure resin of the polyolefinic resin, a resin other than the polyolefinic resin in the total amount of less than 50% by mass may be contained. Further, an acid-modified polyolefin may be used in order to improve the adhesion to the plated steel sheet. As long as the resin contains the polyolefinic resin as the main ingredient in an amount of 50% by mass or more, it may contain a block copolymer, a random copolymer, or a resin containing one type or two or more types of resins other than the polyolefinic resin to be polymerized. More preferably, it contains the polyolefinic resin in an amount of 70% by mass or more, 90% by mass or more, or it is the polyolefinic resin itself. Preferably, the material to be polymerized preferably is one causing a decomposition temperature lower than that of the polyolefinic resin alone.

The case lid is composed of a metal sheet. The metal sheet may be appropriately selected as long as it does not cause a problem in the weldability of the case lid. For example, a Ni-plated steel sheet, an aluminum sheet, a stainless steel sheet, a tin-free steel (TFS) sheet or the like may be adopted. Further, the metal sheet may be plated or chemical-converted in the same manner as the resin-laminated steel sheet described above in order to improve performance such as corrosion resistance.

The surface that serves as the outer surface of the case lid is not resin-laminated in a range of at least 2 mm from the periphery of the opening described later. This is because the opening of the case lid, which will be described later, is sealed by welding. If a resin laminate is present at or near the welding portion, welding defects may occur due to evaporation of the resin or the like. Since the resin laminate is not present in a range of at least 2 mm from the periphery of the opening which is a range serving as the welding portion, welding defects due to the resin laminate are suppressed.

The wider the range where the resin is not laminated, the less adverse effect it has on the welded part, which is preferable. Further, since the non-resin-laminated portion on the outer surface of the case lid can be energized, the non-laminated portion can be used as a battery electrode, that is, at least a part of the positive electrode or negative electrode terminal, or an energizing contact when resistance welding the opening. Depending on these applications and the like, the resin laminate may not be applied in an appropriate range on the outer surface of the case lid. On the other hand, since the resin laminate is useful for improving the corrosion resistance, the resin laminate may be applied to an appropriate range excluding the periphery of the opening to obtain an appropriate corrosion resistance depending on the usage environment, etc. of the battery. As the resin laminate applied to the outer surface of the case lid, the same material as the above resin laminate of the steel sheet of the case body may be used, or a film containing a polyolefinic resin as the main ingredient may be used.

The method of welding the opening is not particularly limited, but resistance welding is preferable with respect to workability and safety, when the fact that the electrolytic solution is injected into the battery cell case and the dimension of the opening to be welded are taken into consideration. A case lid not having a resin-laminated portion on at least a portion of the outer surface, that is, a case lid capable of energizing between the non-laminated portion and the opening to be the welded portion, is suitable for resistance welding.

A resin laminate maybe applied to a surface that serves as the inner surface of the case lid. As a result, appropriate corrosion resistance can be obtained depending on the electrolytic solution of the battery, the usage environment, and the like. Further, it can also serve as a resin for fusion (heat sealing) at a seaming portion to the case body and the like. As the resin laminate, the same type of material as the resin laminate of the steel sheet of the case body described above may be used, or a film containing a polyolefinic resin as the main ingredient may be used.

The case lid has an opening (liquid injection port) for injecting an electrolytic solution and releasing a gas generated by pre-charging/discharging. For batteries, particularly large batteries, it is preferable to inject an electrolytic solution through the opening after assembling the battery, allow the electrolytic solution to permeate into the inside of the battery case, and then perform pre-charging/discharging, because the manufacturing process is simplified in such a way. If the opening is too small, it may be difficult to inject the liquid. Therefore, when the opening is circular, the lower limit of the diameter of the opening may be 0.3 mm or more, and more preferably 0.5 mm or more.

The opening (liquid injection port) may be sealed after completion of liquid injection or pre-charging/discharging. This is to prevent leakage of the electrolytic solution from the opening and invasion of water from the outside through the opening. The sealing of the openings may be performed by welding, for example resistance welding. Here, if the opening is too large, the welded portion for sealing the opening becomes large, and sealing by welding may be difficult. Therefore, when the opening is circular, the upper limit of the diameter of the opening may be 10 mm or less, preferably 5 mm or less, and more preferably 2 mm or less.

The case lid may have terminal holes for a positive electrode terminal and/or a negative electrode terminal in addition to the above-mentioned opening (liquid injection port). As a result, the electric connection with the positive electrode and the negative electrode inside the battery can be obtained, and the battery energy can be used outside the battery.

FIG. 1 is a schematic view of a battery cell case provided with terminal holes for a positive electrode terminal and a negative electrode terminal.

The metal sheet of the case lid is based on either a stainless steel sheet or an aluminum sheet. The case lid may have a terminal hole for a negative electrode terminal in addition to the opening (liquid injection port).

FIG. 2 schematically illustrates this aspect. The negative electrode inside the battery can be electrically connected to the outside via a terminal hole for the negative electrode terminal. On the other hand, the positive electrode inside the battery can be electrically connected to the outside via the battery lid. At this time, the case lid has the same potential as the positive electrode, but since the metal sheet constituting the case lid is either a stainless steel sheet or an aluminum sheet, no metal dissolution occurs into an electrolytic solution, particularly a non-aqueous electrolytic solution used in a lithium ion battery or the like. A usual case lid requires two terminal holes (one for a positive electrode and one for a negative electrode), but the case lid of this embodiment only needs to have one terminal hole. Since the terminal holes can serve as a path for water content to permeate into the battery, the smaller the number of terminal holes, the more the invasion of water content into the battery can be suppressed, and the deterioration of battery performance can be suppressed, which is preferable.

The metal sheet of the case lid is based on either a stainless steel sheet or a Ni-plated steel sheet.

The case lid may have a terminal hole for a positive electrode terminal in addition to the opening (liquid injection port).

FIG. 3 schematically illustrates this aspect. The positive electrode inside the battery can be electrically connected to the outside via a terminal hole for the positive electrode terminal. On the other hand, the negative electrode inside the battery can be electrically connected to the outside via the battery lid. At this time, the case lid has the same potential as the negative electrode, but since the metal sheet constituting the case lid is either a stainless steel sheet or a Ni-plated steel sheet, no metal dissolution occurs into an electrolytic solution, particularly a non-aqueous electrolytic solution used in a lithium ion battery or the like, and the aqueous electrolytic solution used in Ni-MH batteries and the like. A usual case lid requires two terminal holes (one for a positive electrode and one for a negative electrode), but the case lid of this embodiment only needs to have one terminal hole. Since the terminal holes can serve as a path for water content to permeate into the battery, the smaller the number of terminal holes, the more the invasion of water content into the battery can be suppressed, and the deterioration of battery performance can be suppressed, which is preferable.

As described above, the metal material that can be used for the case lid can be appropriately selected from the viewpoint of solubility resistance into the electrolytic solution, depending on whether it is non-polar, negative electrode connection or positive electrode connection. In one embodiment, when the electrolytic solution is a 1M-LiPF₆ ethylene carbonate: diethyl carbonate = 1:1 solution, a Ni-plated steel sheet, a stainless steel sheet, an aluminum sheet, or TFS can be used as the metal material for the non-polar case lid, a Ni-plated steel sheet and a stainless steel can be used for the case lid connected to the negative electrode, and a stainless steel sheet and an aluminum sheet can be used for the case lid connected to the positive electrode. If the case lid is made non-polar, any of Ni-plated steel sheet, stainless steel sheet, aluminum sheet, and TFS sheet can be used, but since two holes are to be made for the positive electrode and negative electrode, it is more costly to seal them. On the other hand, in the case of the negative electrode connection and the positive electrode connection, since the lid also serves as one terminal, only one hole for the electrode is required, and the cost for sealing an extra hole is not required.

When the case lid has only the terminal hole of either the positive electrode or the negative electrode, that is, when the case lid is electrically connected to the negative electrode or the positive electrode, it is preferred that the seaming (caulking) of the case lid and the case body is inwardly wound. This is because if the seamed (caulked) portion is externally wound, it becomes a protruding portion of the battery cell case, and the possibility of a short circuit with the outside increases.

The battery cell case is constructed by joining the case body and the case lid by welding or seaming (caulking). In the schematic views of FIGS. 1 to 3, they are joined by seaming (caulking). In order to reduce material waste, it is preferable to join the edge portions of the case body and the case lid together. When the case body and the case lid are each resin-laminated, the resin laminates can be fused (heat-sealed) to improve the sealing property of the case. When joining by welding, the steel sheets may be welded to each other after removing or evaporating the laminated resin so as not to cause welding defects. The method described in the specification of Japanese Patent Application No. 2019-107770, which is separately filed by the present inventors, may be used.

The shape and size of the battery cell case can be appropriately selected depending on the application and the like. The battery cell case may have a square shape, a cylindrical shape, or the like. The square type is preferable as compared with the cylindrical type, since it has an excellent heat dissipation property, and thus it is easy to increase in size, is excellent in economy, and has a good loadability. The large battery cell case is not particularly defined by any specification or the like, but may have at least one side of 120 mm or more and further 148 mm or more.

According to another aspect of the present invention, a method for manufacturing a battery using the battery cell case as described above is provided. The manufacturing method may include the following steps:
inserting a battery element into the case body;
joining the case body and the case lid by seaming or welding;
injecting an electrolytic solution through the opening; and
electrolyzing and gasifying water in the electrolytic solution by pre-charging/discharging and releasing the water from the battery cell case; and
sealing the metal lid to the opening by welding.

Each of steps will be described below.

In the step of inserting the battery element into the case body, the above-mentioned case body is used for the case body, and the battery element is inserted into the case body. The battery element may be a laminate of a positive electrode, a negative electrode and a separator.

Next, the case body and the case lid are joined by seaming or welding. In order to reduce material waste, it is preferable to join the edge portions of the case body and the case lid together. In FIGS. 1 to 3, joining by seaming (caulking) is schematically shown. When the case body and the case lid are each resin-laminated, the resin laminates can be fused (heat-sealed) together to improve sealing property of the case. When joining by welding, the steel sheets may be welded to each other after removing or evaporating the laminated resin so as not to cause welding defects. The method described in the specification of Japanese Patent Application No. 2019-107770, which is separately filed by the present inventors, may be used.

Next, the electrolytic solution is injected through the opening of the case lid. This electrolytic solution is not particularly limited as an electrolyte, but examples thereof include one obtained by dissolving a supporting salt in a solvent such as an organic solvent, an ionic liquid that is itself in a liquid state, and one in which a supporting salt is further dissolved in the ionic liquid. Examples of the organic solvent include organic solvents usually used in the electrolytic solution of a lithium secondary battery. For example, carbonates, halogenated hydrocarbons, ethers, ketones, nitriles, lactones, oxolane compounds and the like can be used. In particular, propylene carbonate, ethylene carbonate, 1,2-dimethoxyethane, dimethyl carbonate, diethyl carbonate, ethylmethyl carbonate and the like and a mixed solvent thereof are suitable. Among these organic solvents given as examples, in particular, the use of one or more non-aqueous solvents selected from the group consisting of carbonates and ethers are preferable, since the solubility of the supporting salt, dielectric constant and viscosity, and stability are superior and the charging/discharging efficiency of the battery is high.

The ionic liquid is not particularly limited as long as it is an ionic liquid normally used as an electrolytic solution for a lithium secondary battery. For example, examples of the cation component of the ionic liquid include N-methyl-N-propylpiperidinium and dimethylethylmethoxyammonium cation, and examples of the anion component include BF₄⁻, N (SO₂CF₃)₂⁻ and the like.

The supporting salt used in the electrolyte is not particularly limited. For example, salt compounds such as LiPF₆, LiBF₄, LiAsF₆, LiCF₃SO₃, LiN (CF₃SO₂)₂, LiC(CF₃SO₂)₃, LiSbF₆, LiSCN, LiClO₄, LiAlCL₄, NaClO₄, NaBF₄, NaI, and derivatives thereof can be mentioned. Among these, one or more of salts selected from the group consisting of LiPF₆, LiBF₄, LiClO₄, LiAsF₆, LiCF₃SO₃, LiN(CF₃SO₂)₂, LiC(CF₃SO₂)₃, LiN (FSO₂)₂, LiN (CF₃SO₂)(C₄F₉SO₂), a derivative of LiCF₃SO₃, a derivative of LiN(CF₃SO₂)₂ and a derivative of LiC(CF₃SO₂)₃ can be used from the viewpoint of electrical characteristics.

Next, the water content in the electrolytic solution is electrolyzed and gasified by pre-charging/discharging, and the water content is released from the battery cell case. If the battery cell case is sealed with the water content in the electrolytic solution being retained, the water content is subsequently gasified and the internal pressure of the battery cell case rises, leading to damage to the battery cell case, and the water content in the electrolytic solution may adversely affect the battery element to deteriorate the battery performance. In order to avoid these inconveniences, the temperature of the electrolytic solution is raised by pre-charging/discharging to electrolyze and gasify the water content in the electrolytic solution and release it from the battery cell case through the opening of the case lid.

Next, that is, after the water content is released from the battery cell case by pre-charging/discharging, the battery cell case is sealed by welding the metal lid to the opening. The material of the lid is not particularly limited as long as it is a metal that can be welded, and it is preferable that the material is the same as the material of the case lid from a viewpoint of weldability. In this embodiment, the battery cell case can be sealed by welding the opening of the case lid (the injection port of the electrolytic solution). In other words, since the battery can be sealed immediately after pre-charging/discharging, the possibility of water content entering the battery cell case and causing contamination can be dramatically reduced, and such a sealing can contribute to improve and maintain the battery performance.

The reference invention will be described below. The matters disclosed about the reference invention can be incorporated into one aspect of the present invention to the extent that there is no particular contradiction. In addition, the matters disclosed about the present invention can be incorporated into one aspect of the reference invention as long as there is no particular contradiction.

### [TITLE OF REFERENCE INVENTION] Battery Cell Case

### [TECHNICAL FIELD]

The reference invention relates to a battery cell case composed of a case body and a case lid, and in particular, a battery cell case in which the case body and the case lid are each composed of a resin-laminated steel sheet, and an opening for injecting an electrolytic solution and for releasing a gas generated by the pre-charging/discharging is sealed by an opening seal made of a resin-laminated metal foil.

### [BACKGROUND ART]

Currently, among batteries that use a non-aqueous electrolytic solution as an electrolytic solution, such as lithium-ion batteries, square cases are often used for large batteries. Generally, a square case is composed of a lid and a case, a material of which is mainly stainless steel or aluminum, and the lid and the case are assembled by laser welding. However, since the material is expensive and laser welding is time consuming which causes a low productivity, it is desired to replace it with a cheaper material and apply a more productive lid assembly method.

On the other hand, it has been possible in some cases to reduce an amount of aluminum used in order to reduce the cost of case materials, by using aluminum foil laminated with resin, and to seal the case in a short time with fusion of the resin (hereinafter also referred to as --heat seal--). However, the case made of such resin-laminated aluminum foil has a low rigidity. Therefore, when the battery expands due to charging/discharging, etc., the sealed part may peel off, and thus there is concern about the sealing property, and it is vulnerable to piercing from the outside, which limit their applications.

On the other hand, laminated steel sheets obtained by laminating a film mainly composed of polyethylene or polypropylene on chrome-plated steel sheets are widely used as inexpensive case materials for cases of foods and chemicals, etc. A case made of such a laminated steel sheet can store various contents for a long period of time with suppressing their deterioration by selecting a film suitable for the contents. Additionally, it is possible to assemble the case in a short time by seaming a case lid to a case main body and the resulting case can have an even higher strength. Furthermore, if higher sealing property is required, the case lid can be attached to the case body by welding. However, until now, it has not been widely used as a material for a battery case, except in special cases. The reason thereof is considered due to the sealing property of its opening.

For a large battery, after assembling the battery, an electrolytic solution is injected through its opening, the electrolytic solution is permeated into the battery case, and then pre-charging/discharging is performed. After releasing a gas generated at that time to the outside of the case, the opening is often sealed. Sealing is often performed by welding, but it is difficult to close a hole of the laminated steel sheet by welding, because the laminated steel sheet is laminated with resin. Therefore, a laminated steel sheet has not been widely used as a material for a battery case until now.

### [PRIOR ART DOCUMENT]

### [PATENT DOCUMENT]

[Patent Document 1]: Japanese Unexamined Patent Publication (Kokai) No. 2011-258501
[Patent Document 2]: Japanese Unexamined Patent Publication (Kokai) No. 2012-018866
[Patent Document 3]: Japanese Unexamined Patent Publication (Kokai) No. 2012-094374

### [SUMMARY OF THE REFERENCE INVENTION]

### [PROBLEMS TO BE SOLVED BY REFERENCE INVENTION]

Patent Document 1 discloses a method for manufacturing a battery cell case formed by laminating two laminated steel sheets, comprising steps of preparing two laminated steel sheets and superimposing their surfaces to be fused on each other, and of applying heat to the fused portions while bending the periphery of the fused portions to heat-seal the fused portions with each other. According to this method, it is taught that the fusion property between two laminated steel sheets can be improved because the fused portions are not peeled off by bending operation. However, Patent Document 1 does not describe or suggest an opening for injecting an electrolytic solution.

Patent Document 2 discloses a battery cell case and a method for manufacturing the battery cell case, aiming at improving the heat seal strength between laminated steel sheets. The case is formed by superimposing flange portions of a pair of laminated steel sheets having a drawn portion. The respective flange portions have ribs, and the ribs are engaged with each other and heat-sealed. As a result, it is taught that the heat seal strength is improved. However, Patent Document 2 does not describe or suggest an opening for injecting an electrolytic solution.

Patent Document 3 discloses a battery exterior material (case) made of a laminated steel sheet, and a method for manufacturing the exterior material. The exterior material comprises tabs (drawing terminals of a positive electrode and a negative electrode), and a stepped portion matched to the cross-sectional shape of the tab is preliminarily formed on the exterior material (laminated steel sheet) so that the tab can be pulled out from an interior of the exterior material. It is taught that this makes it possible to avoid formation of a gap between the exterior material and the tab to ensure a sealing property of the battery case more reliably. However, Patent Document 3 does not describe or suggest an opening for injecting an electrolytic solution.

As described above, various studies have been conducted on battery cell cases using laminated steel sheets. However, in a practical battery manufacturing process, an opening is indispensable for injecting an electrolytic solution and releasing a gas generated during pre-charging/discharging. However, sufficient studies have not been made on sealing property of the opening.

Therefore, it is an object of the reference invention according to a novel configuration to provide a battery cell case in which the opening of the case lid made of a laminated steel foil can be sealed by the opening seal made of a laminated metal foil.

### [MEANS TO SOLVE PROBLEMS]

The following aspects are provided by the reference invention.

[1] Abattery cell case in which a case body and a case lid are joined by seaming or welding, wherein the case body and the case lid are each made of a resin-laminated steel sheet,
   wherein the resin on an inner surface of the case body and inner and outer surfaces of the case lid is made of a film containing a polyolefinic resin as the main ingredient,
   wherein the case lid has an opening for injecting an electrolytic solution or for releasing a gas generated by pre-charging/discharging,
   wherein an opening seal is made of a resin-laminated metal foil,
   wherein the resin on a surface of the opening seal in contact with the case lid is made of a film containing a polyolefinic resin as the main ingredient,
   wherein the opening seal is fixed to the case lid to seal the opening through a fused portion between the film of the opening seal and the film of the case lid.
[2] The battery cell case according to item [1], wherein the steel sheet of at least one or both of the case body and the case lid is a surface-treated steel sheet that has been subject to a plating with a plating containing at least one of Al, Cr, Ni, Sn, Zn and Zr and/or a chemical conversion treatment with an agent containing at least one of Si, V, Ti, Zr, P and Cr.
[3] The battery cell case according to item [1] or [2], wherein the opening has an area of 0.19 mm² or more and 25 mm² or less, and the shortest distance from the edge of the opening to the edge of the fused portion is 5 mm or more and 15 mm or less.
[4] The battery cell case according to any one of items [1] to [3], wherein the thickness of the metal foil excluding the resin of the opening seal is 10 µm or more and 50 µm or less.
[5] The battery cell case according to any one of items [1] to [4], wherein the fused portion has a thickness of 5 µm or more and 60 µm or less.
[6] The battery cell case according to any one of items [1] to [5], wherein the case lid has terminal holes for a positive electrode terminal and a negative electrode terminal in addition to the opening.

### [THE EFFECT OF THE INVENTION]

According to the reference invention, there is provided a battery cell case in which an opening of a case lid made of a laminated steel sheet can be sealed by an opening seal made of a laminated metal foil.

### [BRIEF DESCRIPTION OF DRAWINGS]

[FIG. 4]
   FIG. 4 is a schematic view of a battery cell case, according to one aspect of the reference invention.
[FIG. 5]
   FIG. 5 is an enlarged schematic view of the opening of FIG. 4 before and after sealing.

### [EMBODIMENTS FOR CARRYING OUT THE INVENTION]

FIG. 4 shows a schematic view of a battery cell case, according to one aspect of the reference invention. The battery cell case is configured by joining the case body and the case lid by welding or seaming (caulking). In order to reduce material waste, it is preferable to join the case body and the edge portion of the case lid.

The case body and the case lid are each composed of a resin laminated steel sheet.

The steel sheet as a base material for the resin-laminated steel sheet may be appropriately selected as long as it does not cause problems in plating property, weldability, and adhesion to the resin laminate. The type of steel sheet may be selected so that appropriate corrosion resistance can be obtained depending on the electrolytic solution of the battery, the usage environment, and the like. Since corrosion resistance and case strength can be ensured depending on the thickness of the steel sheet, a steel sheet having a good cost performance may be used. As the steel sheet, in addition to stainless steel, pure iron, carbon steel, low alloy steel, zirconium, vanadium, aluminum, aluminum iron alloy, zinc copper alloy and the like may be adopted. The thickness of the steel sheet can be appropriately selected. For example, the thickness of the steel sheet may be 0.05 mm or more, preferably 0.1 mm or more, 1.2 mm or less, and preferably 1.0 mm or less. This is because if it is too thin, sufficient strength as a battery cell case may not be obtained, and if it is too thick, workability is lowered and the cost is increased.

The steel sheet may be a plated steel sheet. As for the type of plating, the type of plating may be selected so as to obtain appropriate corrosion resistance depending on an electrolytic solution of the battery, usage environment, and the like, as long as the adhesion to the resin is not affected. For example, the plating may contain one or more kinds of elements from Al, Cr, Ni, Sn, Zn and Zr. Plating containing these elements can be obtained by a conventional method. In plating containing a plurality of elements, the plating element may be plated in one or more states of an alloy layer, a layered state, and a partially granular and partial layered state. From the viewpoint of adhesion to the resin, corrosion resistance, availability, etc., the plating may be a tin-free steel having a chromium oxide layer and a metallic chromium layer, a nickel plating such as one having a nickel layer, or a nickel layer and a nickel-iron alloy layer, a tin plating such as one having a tin layer or a tin layer and a tin-iron alloy layer.

The plating amount may be appropriately selected so as to obtain appropriate corrosion resistance depending on an electrolytic solution of the battery, usage environment, etc., and may be in the range of 5 mg/m² to 5 g/m². If it is no more than 5 mg/m², the plating cannot adhere to the whole area, and the adhesion to the resin and the electrolytic solution resistance may be easily deteriorated. If it is no less than 5 g/m², cracks may occur in the plating during processing, which may cause a decrease in peel strength and the like.

There may be several types of plating baths for plating, but the performance is exhibited regardless of the plating bath. In addition to electroplating, the plating method may be thermal spraying, vapor deposition, or hot-dip plating.

In order to further improve properties such as the adhesion of the resin laminate to the steel sheet, processing adhesion and corrosion resistance, the steel sheet may be subjected to a known chemical conversion treatment. The chemical conversion treatment in this case is not particularly limited, and a known treatment can be applied, and may be a silica-based chemical conversion treatment, a chromate-based chemical conversion treatment, or the like. For example, a silane coupling agent may be used, and in the case of an inorganic chemical conversion treatment film layer, one, two or more selected from silica fine particles, vanadium compounds, titanium compounds, zirconium compounds, phosphoric acid compounds, chromium oxides and the like is exemplified. The chromium oxide may contain chromium of any valence, and may contain, for example, trivalent chromium and/or hexavalent chromium.

The silane coupling agent is not particularly limited, and an appropriate silane coupling agent may be selected in consideration of adhesion to the resin to be laminated. For example, vinyl trimethoxysilane, vinyl triethoxysilane, γ-aminopropyltrimethoxysilane, γ-aminopropylethoxysilane, N-[2-(vinylbenzylamino) ethyl] -3-aminopropyltrimethoxysilane, γ-methacryloxypropylmethyldimethoxysilane, γ-methacryloxypropyltrimethoxysilane, γ-methacryloxypropylmethyldiethoxysilane, γ-methacryloxypropyltriethoxysilane, γ-glycidoxypropyltriethoxysilane, γ-glycidoxypropylmethyldiethoxysilane, γ-glycidoxypropyltrimethoxysilane, 2- (3,4-epoxycyclohexyl) ethyltrimethoxysilane, N-6 (aminoethyl) γ-aminopropyltrimethoxysilane, N-β- (aminoethyl) -γ-aminopropyltriethoxysilane , N-β- (aminoethyl) -γ-aminopropylmethyldimethoxysilane, N-phenyl-γ-aminopropyltrimethoxysilane, γ-mercaptopropyltrimethoxysilane and the like can be mentioned. The silane coupling agent may be used alone or in combination of two or more.

There are two types of silica fine particles, that is, liquid phase silica and vapor phase silica, and either of these may be used. Examples of the vanadium compound include, but are not limited to, ammonium vanadate, ammonium metavanadate, and the like.

Examples of the titanium compound include, but are not limited to, Ti alkoxide, basic Ti carbonate, Ti fluoride, Ti-containing organic chelate, and Ti-containing coupling agent (Ti alkoxide compound to which an organic functional group such as epoxy group, vinyl group, amino group and methacryloxy group is bonded) and the like.

Examples of the zirconium compound include, but are not limited to, Zr alkoxide, basic Zr carbonate, Zr fluoride, and Zr-containing organic chelate.

Examples of the phosphoric acid compound include, but are not limited to, orthophosphoric acid, pyrophosphoric acid, and polyphosphoric acid.

In the case of chromium oxide treatment, various chromate treatments such as electrolytic chromate and resin chromate, and other chromate-free chemical conversion treatments may be performed. When the steel sheet is a tin-free steel that has already been subjected to a chromium-containing surface treatment, the adhesion of the resin to the steel sheet, processing adhesion, and electrolytic solution resistance are as good as those of the metal surface that has been subject to various chromate treatments.

The adhered amount of the chemical conversion coating film layer with respect to the chemical conversion coating film layer below the outermost layer, that is, the chemical conversion coating film layer used for the front surface may be 20 mg/m² or more and 1000 mg/m² or less, in order to ensure good adhesion and corrosion resistance. If the adhered amount is excessively small, the chemical conversion treatment coating film may not be sufficiently present on the surface of the steel sheet, and the adhesion to the resin may not be sufficient. On the other hand, if the adhered amount is excessively large, the chemical conversion coating itself may be coagulated and broken, and it causes the high cost.

Before the chemical conversion treatment, a scale removal treatment may be performed as a base treatment. Examples of the scale removing treatment method include pickling, sandblasting, and grid blasting. After pickling or sandblasting, an additional base treatment using chromate treatment or chromate-free treatment, strike plating and epoxy primer treatment is preferable from the viewpoint of strengthening the chemical adhesion between the laminated resin and the steel sheet.

In addition to the above, the chemical conversion treatment layer can contain various rust preventives, pigments, inorganic compounds, and organic compounds.

The method for forming the chemical conversion treatment layer is not particularly limited, and known methods such as coating and baking can be applied without limitation.

In particular, the steel sheet of either one or both of the case body and the case lid may be a surface-treated steel sheet that has been treated to contain at least one of Cr, Si and Zr. The steel sheet subjected to these treatments is preferable because it has excellent adhesion to the polyolefinic resin.

The resin-laminated steel sheet is a steel sheet that serves as a base material to which a resin is laminated. The resin on the inner surface of the case body and the inner and outer surfaces of the case lid is composed of a film containing a polyolefinic resin as the main ingredient. Since the polyolefinic resin is suitable for a fusion (heat seal) resin and has an electrolytic solution resistance, it can also be used as an inner surface resin of a battery cell case.

The polyolefinic resin is a resin having the following repeating unit (formula 1). The fact that the resin is the main ingredient means that the resin having the repeating unit of (Formula 1) constitutes 50% by mass or more.

-CR¹H-CR²R³- (Formula 1)

wherein R¹ and R² each independently represents an alkyl group having 1 to 12 carbon atoms or hydrogen, and R³ represents an alkyl group having 1 to 12 carbon atoms, aryl group or hydrogen in Formula 1.

The polyolefinic resin may be a homopolymer of the above-mentioned structural unit or a copolymer of two or more types. It is preferable that 5 or more repeating units are chemically bonded. If the number is less than 5, it may be difficult to exert a polymeric effect (for example, flexibility, extensibility, etc.).

Examples of the repeating unit include repeating units obtained upon addition polymerization of terminal olefins such as ethylene, propene (propylene), 1-butene, 1-pentene, 4-methyl-1-pentene, 1-hexene, 1-octene, 1-decene and 1-dodecene, repeating units obtained upon addition polymerization of aliphatic olefins such as isobutene, and repeating units obtained upon addition polymerization of aromatic olefins such as styrene monomer, as well as alkylated styrene such as o-methylstyrene, m-methylstyrene, p-methylstyrene, o-ethylstyrene, m-ethyl styrene, o-ethyl styrene, o-t-butyl styrene, m-t-butyl styrene, p-t-butyl styrene, halogenated styrene such as monochlorostyrene, styrenic monomer such as terminal methyl styrene.

Examples of homopolymers having such a repeating unit include homopolymers of terminal olefins such as low-density polyethylene, medium-density polyethylene, high-density polyethylene, linear low-density polyethylene, crosslinked polyethylene, polypropylene, polybutene, polypentene, polyhexene, polyoctenylene, polyisoprene, polybutadiene and the like. Further, copolymers of the above repeating unit, include aliphatic polyolefins such as an ethylene-propylene copolymer, an ethylene-butene copolymer, an ethylene-propylene-hexadiene copolymer, and an ethylene-propylene-5-ethylidene-2-norbornene copolymer, and aromatic polyolefins such as styrenic copolymers, but the present invention is not limited to these, as long as the conditions of the above repeating units are satisfied. Further, it may be a block copolymer or a random copolymer. Moreover, these resins may be used individually or in a mixture of 2 or more types.

Further, the polyolefin used in the reference invention may contain the above-mentioned olefin unit as the main ingredient, and vinyl monomer, polar vinyl monomer, and diene monomer, which are a substituent of the above-mentioned unit, may be copolymerized in a monomer unit or a resin unit. The copolymer composition is 50% by mass or less, and preferably 30% by mass or less, based on the above olefin unit. If it exceeds 50% by mass, the properties of the olefin resin such as the barrier property against a corrosion-causing substance may deteriorate.

Examples of the polar vinyl monomer include acrylic acid and acrylic acid derivatives such as methyl acrylate and ethyl acrylate, methacrylic acid and methacrylic acid derivatives such as methyl methacrylate and ethyl methacrylate, acrylonitrile, maleic anhydride and imide derivatives of maleic anhydride, vinyl chloride and the like.

The most preferable resin from the viewpoint of handleability and barrier property against a corrosion-causing substance are low-density polyethylene, medium-density polyethylene, high-density polyethylene, linear low-density polyethylene, crosslinked polyethylene, polypropylene, or a mixture of two or more of these.

As the resin used in the reference invention, a film containing polyethylene or polypropylene as the main ingredient is more suitable from the viewpoint of cost, distribution, ease of fusion, and the like.

Here, the resin containing a polyolefinic resin as the main ingredient means a resin containing 50% by mass or more of the polyolefinic resin, and in addition to the pure resin of the polyolefinic resin, a resin other than the polyolefinic resin in the total amount of less than 50% by mass may be contained. Further, an acid-modified polyolefin may be used in order to improve the adhesion to the plated steel sheet. As long as the resin contains the polyolefinic resin as the main ingredient in an amount of 50% by mass or more, it may be a block copolymer, a random copolymer, or a resin containing one type or two or more types of resins other than the polyolefinic resin to be polymerized. More preferably, it contains the polyolefinic resin in an amount of 70% by mass or more, 90% by mass or more, or it is the polyolefinic resin itself. Preferably, the material to be polymerized preferably is one causing a decomposition temperature lower than that of the polyolefinic resin alone.

The case lid has an opening for injecting an electrolytic solution or releasing a gas generated by pre-charging/discharging. For batteries, particularly large batteries, it is preferable to inject an electrolytic solution through an opening after assembling the battery, allow the electrolytic solution to permeate into the inside of the battery case, and then perform pre-charging/discharging because the above manufacturing steps make a process simplified. If the opening is too small, it may be difficult to inject the liquid. If the opening is too large, the fusion (heat seal) portion for sealing the opening becomes wide and its peripheral length becomes long. That is, the cross-sectional area of the resin through which water vapor from the outside can permeate becomes large, and it becomes more likely to allow water vapor or the like to easily invade the inside of the battery from the outside through the fusion (heat seal) portion. As a result, there would be higher possibility of causing deterioration of the battery. Therefore, the area of the opening may be 0.19 mm² or more and 25 mm² or less. When the opening is circular, the diameter of the opening may be 0.5 mm or more and 5 mm or less.

The case lid may have terminal holes for positive electrode terminals and negative electrode terminals in addition to the above-mentioned opening (liquid injection port). As a result, the electric connection between the positive electrode and the negative electrode inside the battery can be obtained, and the battery energy can be used outside the battery.

The opening of the case lid is tightly shut (sealed) by the opening seal. FIG. 5 is a diagram schematically showing before and after the opening is sealed by the opening seal.

The opening seal is composed of a resin-laminated metal foil. The metal foil as the base material may be appropriately selected as long as it does not cause a problem in the adhesion of the resin, and for example, an aluminum foil, a stainless steel foil, or the like may be adopted. Further, the metal foil may be plated or chemical-converted in the same manner as the above-mentioned resin-laminated steel sheet in order to improve performance such as adhesion and corrosion resistance.

The thickness of the metal foil (excluding resin) may be 10 µm or more and 50 µm or less. If it is too thin, pinholes and tears may occur, and sufficient fusion strength may not be obtained, making it impossible to withstand changes in internal pressure inside the battery. If it is too thick, the heat transfer property may decrease when the resin laminate is fused, resulting in poor fusion (heat sealing), or the heat required for fusion may increase and the inside of the battery may be heated and adversely affected.

The resin-laminated metal foil is a metal foil that serves as a base material to which a resin is laminated. The resin on the surface of the opening seal in contact with the case lid is composed of a film containing a polyolefinic resin as the main ingredient. As the film containing the polyolefinic resin as the main ingredient, the above-mentioned film containing the polyolefinic resin as the main ingredient, which is used for the resin-laminated steel sheet as described, can be used.

It is not necessary to laminate the resin on the surface of the opening seal that does not come into contact with the case lid, but it is preferable to laminate the resin from the viewpoint of protecting the metal foil. For this resin laminate, the above-mentioned film containing a polyolefinic resin as the main ingredient may be used, or a film containing polyethylene terephthalate (PET) as the main ingredient, which is said to have excellent weather resistance and the like, may be used.

As shown in FIG. 5, the resin on the opening seal is fused (heat-sealed) with the resin on the outer surface of the resin-laminated steel sheet constituting the case lid to form the fused portion. The opening seal is fixed to the case lid via the fused portion, and the opening is tightly shut (sealed). By pressing from the upper surface of the opening seal while applying heat with an iron press or the like, the temperature of the resin of the opening seal and the resin of the case lid in contact therewith may reach above the melting point of the resins, and both resins can be fused to form a fused portion. Sealing by fusion is preferable because the work load is significantly lower than that by a conventional welding.

The distance from the edge of the opening to the edge of the fused portion (see "Fusion width" in FIG. 5) is not particularly limited as long as it can seal the opening. However, if the fusion width is too short, water vapor or the like easily enters the inside of the battery from the outside through the fused (heat seal) portion, and the possibility of deterioration of the battery increases. Therefore, the lower limit of the fusion width may be, for example, 3 mm or more at the shortest, and more preferably 5 mm or more. On the other hand, if the fusion width is increased, the sealing property is improved, but if the fusion width is 15 mm or more, the sealing property is almost saturated. Further, if the fusion width is too long, the peripheral length of the fused (heat seal) portion becomes long, that is, the cross-sectional area of the resin capable of allowing water vapor from the outside to permeate becomes large. As a result, water vapor, etc. is likely to easily enter the inside of the battery from the outside via the fused (heat seal) portion, and the possibility of deterioration of the battery increases. Therefore, the upper limit of the fusion width may be 15 mm or less, and preferably 12 mm or less.

The thickness of the fused portion (see "Fusion thickness" in FIG. 5) is not particularly limited as long as it can seal the opening. However, if it is too thin, sufficient fusion strength may not be obtained and peeling may occur easily. For example, it may be 5 µm or more, and more preferably 8 µm or more. Further, if it is too thick, the diffusion path of water vapor through the fused portion becomes wide, the amount of water vapor inside the battery increases, and the battery may be deteriorated. Therefore, for example, it may be 60 µm or less, and more preferably 36 µm or less.

In one aspect of the reference invention, the fusion width having an appropriate length may be combined with the fusion thickness having an appropriate thickness and the opening diameter having an appropriate length to enhance the sealing property. As an example, the fusion width/(fusion thickness × opening diameter of the opening) may be 0.04 or more. It is generally considered that the larger the index regarding the adhesion, the higher the sealing property, and it may be preferably 0.06 or more, and more preferably 0.1 or more. The upper limit of the index regarding the adhesion is not particularly specified, and may be 6 or less, 1 or less, or 0.5 or less depending on the range of the fusion width, the fusion thickness and the opening diameter.

As illustrated in the schematic diagram of FIG. 4, the battery cell case is configured by joining the case body and the case lid by welding or seaming (caulking). In order to reduce material waste, it is preferable to join the edge portions of case body and the case lid together. Since the case body and the case lid are each made of a resin-laminated steel sheet, the resins can be fused (heat-sealed) to improve the sealing property of the case. When welding resin-laminated steel sheets with each other, the steel sheets may be welded to each other after removing or evaporating the resin so as not to cause welding defects. The method described in Japanese Patent Application No. 2019-107770, which is a separate application filed by the present inventors, can be used.

The shape and size of the battery cell case can be appropriately selected depending on the application and the like. The battery cell case may have a square shape, a cylindrical shape, or the like. The square type is preferable as compared with the cylindrical type, since it has an excellent heat dissipation property, and thus it is easy to increase in size, is excellent in economy, and has a good loadability. The large battery cell case is not particularly defined by any specification or the like, but may have at least one side of 120 mm or more and further 148 mm or more.

### [Reference Examples]

The reference invention will be described with reference to the following reference examples. However, the reference invention should not be construed as being limited to these reference examples.

Under the conditions shown in Table 2, a case body and a case lid were prepared, and they were assembled to prepare a battery cell case. The case lid has an opening as a liquid injection port, and the liquid injection property from the opening (liquid injection port) was evaluated. After that, the opening (liquid injection port) was sealed with an opening seal, and the peel strength and sealing property of the sealed portion of the completed battery cell case were also evaluated. The evaluation results are also shown in Table 2.

### (Liquid Injection)

An electrolytic solution was injected into the battery cell case from the opening of the case lid using an injection needle. The scores are as follows. As the electrolytic solution, 1M-LiPF₆ EC/DEC (1/1) was used.
E (Excellent): Capable of being injected with an injection needle having an outer diameter of 0.8 mm.
VG (Very Good): Capable of being injected with an injection needle having an outer diameter of 0.4 mm.
G (Good): Capable of being injected with an injection needle having an outer diameter of less than 0.4 mm.
P (Poor): Not capable of being injected with an injection needle having an outer diameter of less than 0.4 mm.

In the case of an injection needle having an outer diameter of 0.8 mm and an outer diameter of 0.4 mm, it is possible to inject liquid, and especially in the case of an injection needle having an outer diameter of 0.8 mm, it is possible to complete the injection in a short time, and therefore, it was assessed as E.

### (Peel strength)

After injecting the electrolytic solution (1M-LiPF₆ EC/DEC) into the battery cell case, the injection port (opening of the case lid) was tightly shut (sealed) by fusing the opening seal. In an environment with an ambient temperature of 85 °C and a relative humidity of 85%, the sealed battery cell case was held with the lid facing down. After 100 days have passed from the start of being held, the presence or absence of peeling is confirmed at the sealed portion, that is, the fusion portion between the resin laminate of the opening seal and the resin laminate of the case lid. If peeling is confirmed, the generated range (width) of the peeling was measured. The scores are as follows.
E (Excellent): Maximum peeling width is 0.1 mm or less.
VG (Very Good): Maximum peeling width is more than 0.1 mm and 0.2 mm or less. G (Good): Maximum peeling width is more than 0.2 mm and 0.5 mm or less.
P (Poor): Maximum peeling width exceeds 0.5 mm.

### (Sealing Property)

After the evaluation of the peel strength, the opening seal was removed from the liquid injection port (opening), the electrolytic solution inside the battery cell case was collected, and the hydrofluoric acid concentration in the electrolytic solution was measured by chemical analysis. Hydrofluoric acid is generated by the water that has entered the battery cell case. It is considered that the greater the amount of water that has entered, the higher the hydrofluoric acid concentration, and the following scores were given.
E (Excellent): Hydrofluoric acid concentration is 10 ppm or less.
VG (Very Good): Hydrofluoric acid concentration exceeds 10 ppm, and is 15 ppm or less.
G (Good): Hydrofluoric acid concentration is more than 15ppm and less than 20ppm.
P (Poor): Hydrofluoric acid concentration exceeds 20 ppm.

In No. 14, the resin laminate (sealing material) for the opening seal was 100 µm, which was too thick, and the opening could not be sealed by the opening seal. In other examples, the opening of the case lid made of a laminated steel sheet could be sealed by the opening seal made of a laminated metal foil to obtain a battery cell case.

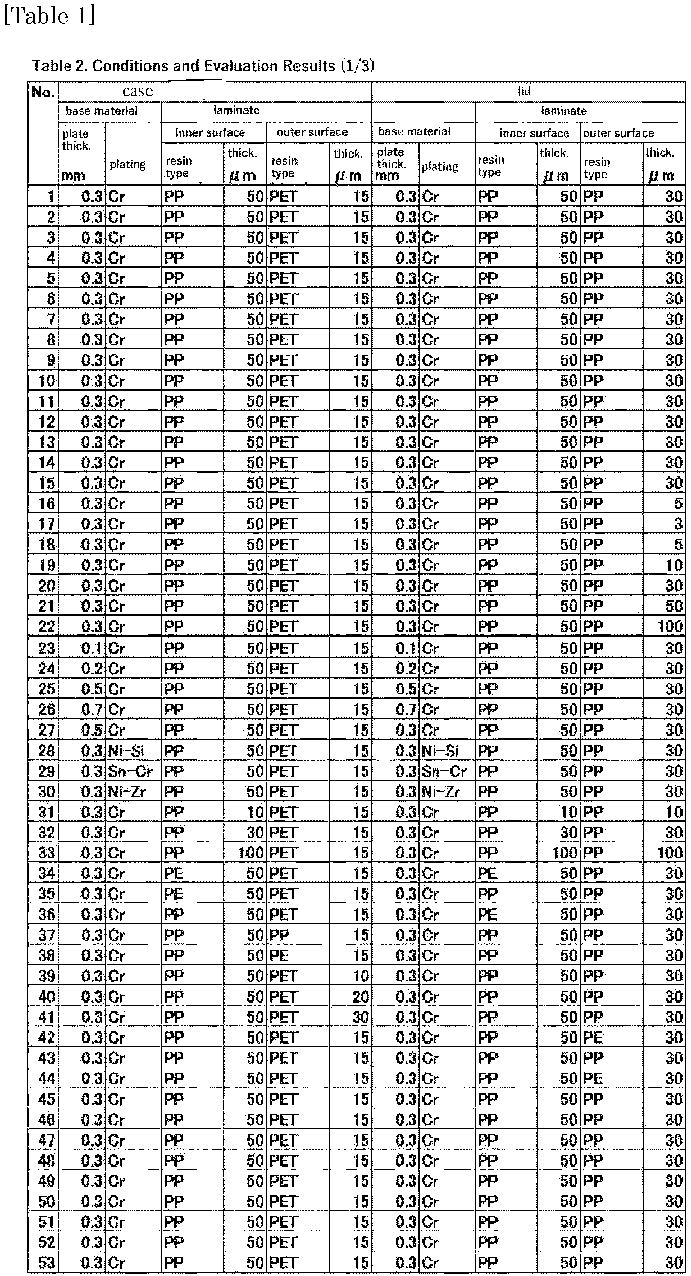

Ni-Si: Silane coupling treatment on Ni plating
Sn-Cr: Chromate treatment on Sn plating
Ni-Zr: Zr treatment on Ni plating
PP: Polypropylene
PE: Polyethylene
PET: Polyethylene terephthalate

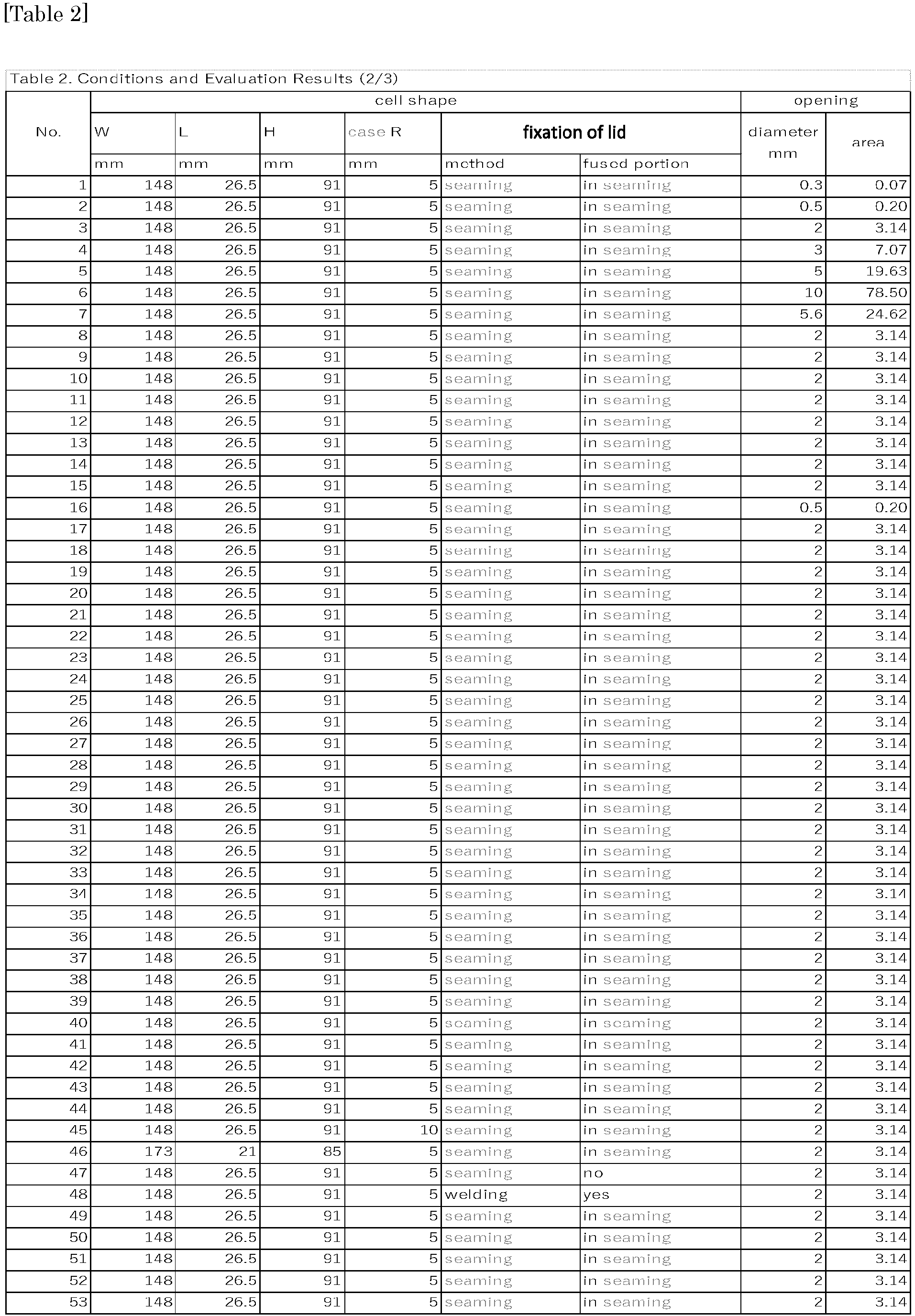

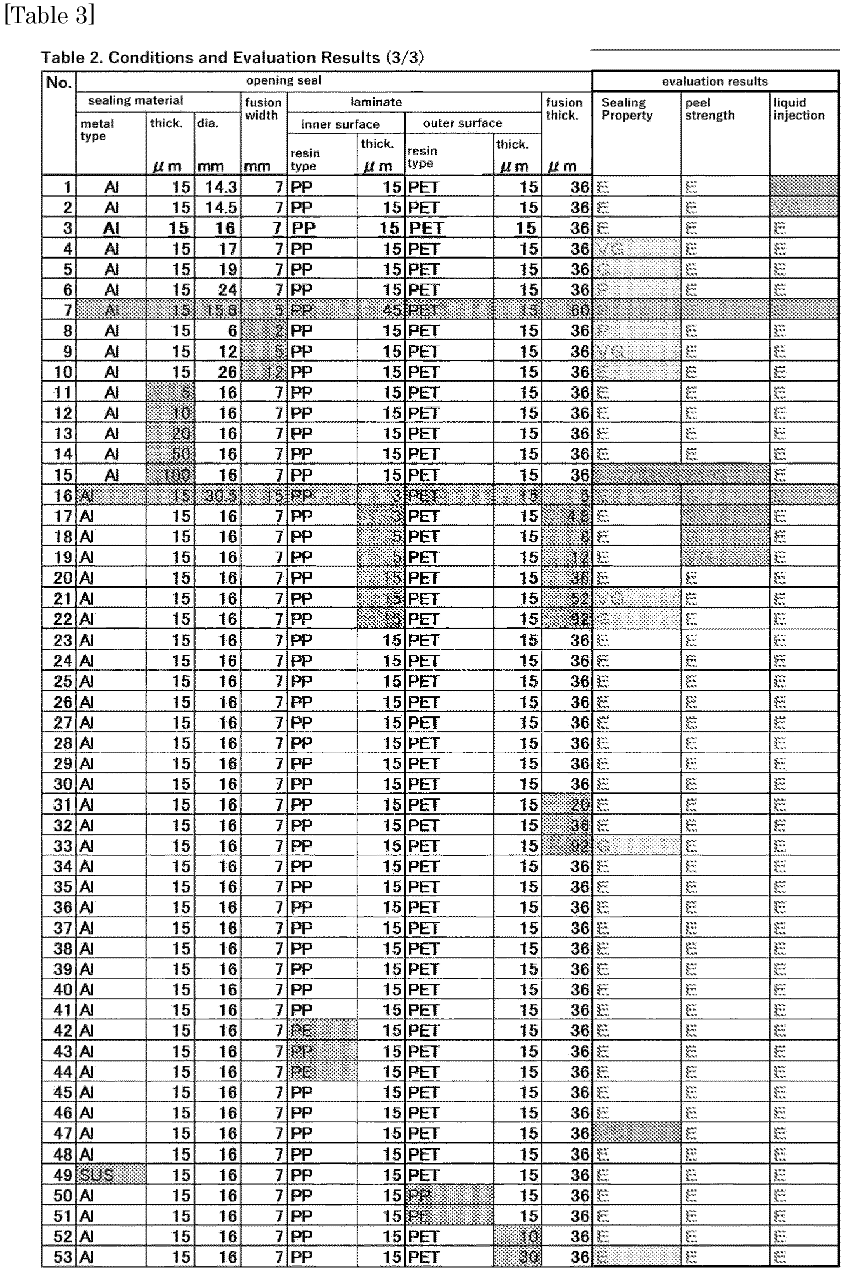

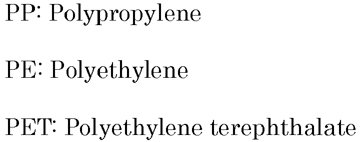

### [EXPLANATION OF REFERENCE SYMBOLS]

- 1: Case body
- 2: Case lid
- 3: Sealing portion
- 4: Joint
- 5: Opening seal
- 51: Metal foil
- 52, 53: Resin
- 6: Periphery of opening (liquid injection port)
- 61: Steel sheet
- 62, 63: Resin
- 7: Opening (liquid injection port) diameter
- 8: Fusion width
- 9: Fusion thickness

### EXAMPLES

The present invention will be described with reference to the following examples. However, the present invention should not be construed as being limited to these examples.

Under the conditions shown in Table 1, a case body and a case lid were prepared, and they were assembled to prepare a battery cell case. The case lid has an opening as a liquid injection port, and whether the opening (liquid injection port) can be sealed by welding, that is, the weldability is evaluated, and further, sealing property of the sealing portion (welding portion) was also evaluated. The solubility resistance (electrolyte resistance) of the case lid was also evaluated. The evaluation results are also shown in Table 1.

### (Weldability)

The opening (liquid injection port) of the case lid was sealed by resistance welding. If it could be sealed by welding, it was rated as "good". If it could not be sealed, it was rated as "no good".

In No. 4, a polypropylene film was laminated on the outer surface of the case lid, and the polypropylene was evaporated due to welding heat, and thus welding defects occurred, sealing could not be performed, and then it was evaluated as "no good". Except for No.4, all of the samples could be sealed by welding and evaluated as "good".

In the subsequent tests, batteries were prepared as follows and their seal property and solubility resistance were evaluated.

### (a) Positive Electrode Plate

Lithium cobalt oxide was used as the positive electrode active material. Acetylene black and polyvinylidene fluoride (PVDF) were mixed with this so as to have a mass ratio of 10:10: 1, and then applied to an Al foil as an aqueous dispersion and dried. This was rolled to a predetermined thickness and cut out to a predetermined size to obtain a positive electrode plate.

### (B) Negative Electrode Plate

Amorphous carbon was used as a negative electrode active material. This was dry-mixed with acetylene black, which is a conductive material, and then N-methyl-2-pyrrolidone (NMP) in which polyvinylidene fluoride was dissolved was uniformly dispersed in the mixture to prepare a paste having a ratio of carbon: acetylene black: PVDF = 88: 5: 7 by mass ratio was prepared. This was applied to a Cu foil, dried, and then rolled to a predetermined thickness, and then cut into a predetermined size to obtain a negative electrode plate.

### (C) Separator and Electrolytic Solution

A polyethylene microporous membrane was used for a separator.

As the electrolytic solution, a solution (1M-LiPF₆ EC/DEC (1/1)) in which 1 mol/L of lithium hexafluoride phosphate was added to a mixture of ethylene carbonate: diethyl carbonate at a volume ratio of 1: 1 was used.

### Battery

An electrode group wound with a separator sandwiched between the positive electrode plate and the negative electrode plate was collapsed into a shape that fits in the cell case, and the positive electrode plate was welded to an Al lead and the negative electrode plate was welded to a Ni lead.

As shown in FIG. 1, in a battery cell case having terminal holes for positive electrode terminals and negative electrode terminals on the lid, the Al tab was welded to the positive electrode terminal and the Ni lead was welded to the negative electrode terminal.

As shown in FIG. 2, in the case where the lid has only the terminal hole for the negative electrode terminal and the lid has the same potential as the positive electrode, the Al tab is welded to the lid and the Ni tab is welded to the negative electrode terminal.

As shown in FIG. 3, in the case where the lid has only the terminal hole for the positive electrode terminal and the lid has the same potential as the negative electrode, the Al tab is welded to the positive electrode terminal and the Ni tab is welded to the lid.

After seaming or tightening the lid, the resin was fixed to the case by fusion or welding.

The inside of the battery was dried in an atmosphere with a dew point of - 67 °C to remove water. The above electrolytic solution was injected in the same atmosphere. The battery was charged at 3.6V in the same atmosphere. By this treatment, the water remaining in the battery was electrolyzed and removed. Then, in the same atmosphere, a metal of the same type as the case lid was welded as a lid (sealing material) for the opening, and then the battery was taken out into a normal atmosphere.

### Test conditions

### (Sealing Property)

The sealed battery cell case was held with the lid facing down in an environment with an atmospheric temperature of 85 °C and a relative humidity of 85%. After 100 days from the start of being held, the electrolytic solution inside the battery cell case was recovered.

The recovered electrolytic solution was chemically analyzed and the concentration of hydrofluoric acid in the electrolytic solution was measured. It is considered that hydrofluoric acid is generated by the water that has entered the battery cell case, and that the greater the amount of water that has entered, the higher the hydrofluoric acid concentration, and the following scores were given.
VG (Very Good): Hydrofluoric acid concentration is 5 ppm or less.
G (Good): Hydrofluoric acid concentration is more than 5ppm and less than 10ppm.
P (Poor): Hydrofluoric acid concentration exceeds 10 ppm.

For all the examples except No.4, in which welding could not be used, good sealing property (G or VG) was confirmed. Specifically, in the example where the assembly (joint) of the case body and the case lid are heat-sealed (No. 12) and the example where the assembly (joint) is welded (No. 18), even better sealing property (VG) was confirmed.

### (Solubility Resistance)

Following the evaluation of the sealing property, the recovered electrolytic solution was chemically analyzed and the metal ion concentration in the electrolytic solution was measured. It is considered that the metal ions are eluted from the steel sheet constituting the case body and/or the metal sheet constituting the case lid into the electrolytic solution, and the following scores are given.
VG (Very Good): Metal ion concentration is 10 ppm or less.
G (Good): Metal ion concentration is more than 10ppm, and 20ppm or less.
P (Poor): Metal ion concentration exceeds 20 ppm.

In all the examples, the metal ion concentration was low (VG or G), and good corrosion resistance was confirmed.

Separately, the battery cell case wherein the metal sheet of the case lid was an aluminum sheet, the case lid was provided with a terminal hole for the positive terminal and the case lid was electrically connected to the negative electrode, was evaluated for corrosion resistance. It was confirmed that the ion concentration in the electrolytic solution was over 20 ppm.

Further, the battery cell case wherein the metal sheet of the case lid was a Ni plated steel sheet, the case lid was provided with a terminal hole for the negative terminal and the case lid was electrically connected to the positive electrode, was evaluated for corrosion resistance. It was confirmed that the ion concentration in the electrolytic solution was over 20 ppm.

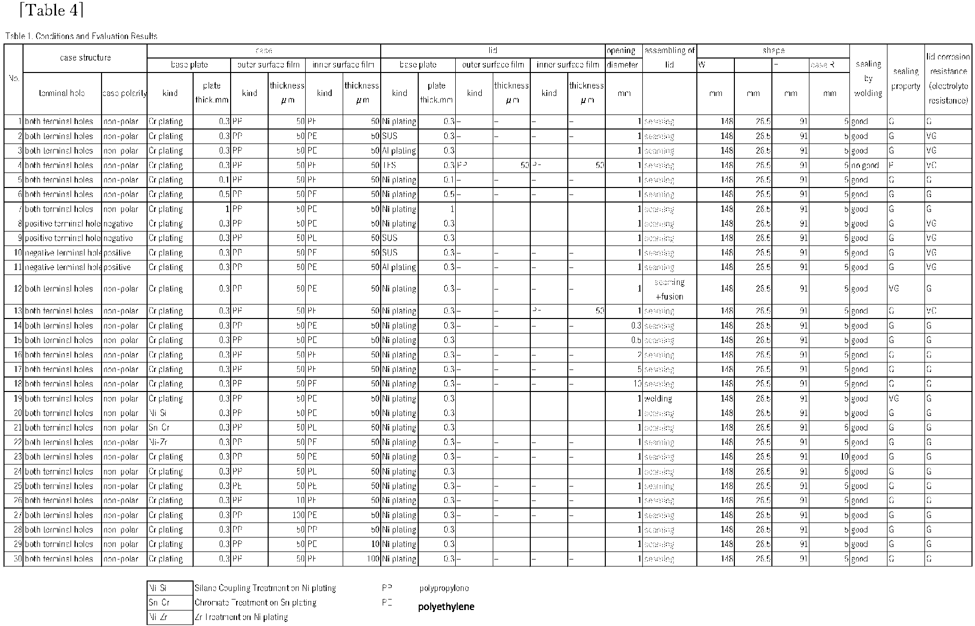

### EXPLANATION OF SYMBOLS

1...Case
2...Lid
3...Sealing material
4...Liquid injection port
5...Insulation seal
61...Positive electrode
62...Positive electrode current collector
63...Positive electrode tab
64...Positive electrode terminal
71...Negative electrode
72...Negative electrode current collector
73...Negative electrode tab
74...Negative electrode terminal

## Claims

1. Abattery cell case in which a case body and a case lid are joined by seaming or welding,
wherein the case body is made of a resin laminated steel sheet on a surface which serves as an inner surface of the case body,
the resin laminate is made of a film of which a polyolefinic resin is the main ingredient,
the case lid is made of a metal sheet,
the case lid has an opening for injecting an electrolytic solution or for releasing a gas generated by pre-charging/discharging; and
a range of at least 2 mm from the periphery of the opening in a surface which serves as an outer surface of the case lid is not resin laminated.

2. The battery cell case according to claim 1, wherein the steel sheet of the case body is a material based on a surface-treated steel sheet that has been subjected to a plating containing at least one of Al, Cr, Ni, Sn, Zn, Zr, Si, V, Ti and P and/or a chemical conversion treatment containing at least one of Si, V, Ti, Zr, P and Cr, and
the metal sheet of the case lid is a material based on any of a Ni -plated steel sheet, a stainless steel sheet or an aluminum sheet.

3. The battery cell case according to claim 1 or 2, wherein the opening has a diameter of 0.5 mm or more and 10 mm or less.

4. The battery cell case according to any one of claims 1 to 3, wherein the case lid has a terminal hole for a positive electrode terminal and a terminal hole for a negative electrode terminal in addition to the opening.

5. The battery cell case according to any one of claims 1 to 3, wherein the metal sheet of the case lid is a material based on either a Ni-plated steel sheet or a stainless steel sheet, and
the case lid has a terminal hole for a positive electrode terminal in addition to the opening.

6. The battery cell case according to any one of claims 1 to 3, wherein the metal sheet of the case lid is a material based on either a stainless steel sheet or an aluminum sheet, and
the case lid has a terminal hole for a negative electrode terminal in addition to the opening.

7. The battery cell case according to any one of claims 1 to 4, wherein a film containing a polyolefinic resin as the main ingredient is laminated on the surface which serves as the inner surface of the case lid.

8. The battery cell case according to any one of claims 1 to 7, wherein the opening is closed and sealed by welding.

9. A method for manufacturing a battery using the battery cell case according to any one of claims 1 to 8, comprising the following steps:
inserting a battery element into the case body;
joining the case body and the case lid by seaming or welding;
injecting an electrolytic solution through the opening; and
electrolyzing and gasifying water in the electrolytic solution by precharging/discharging and releasing the water from the battery cell case; and
sealing the metal lid to the opening by welding.

## Amended claims

### Amended claims under Art. 19.1 PCT

1. (After Amendment) A battery cell case in which a case body and a case lid are joined by seaming or welding,
wherein the case body is made of a resin laminated steel plate on a surface which serves as an inner surface of the case body,
the resin laminate is made of a film of which a polyolefinic resin is the main ingredient,
the case lid is made of a metallic plate,
the case lid has an opening for injecting an electrolytic solution or for releasing a gas generated by pre-charging/discharging;
a range of at least 2 mm from the periphery of the opening in a surface which serves as an outer surface of the case lid is not resin laminated;
the steel plate of the case body is a material based on a surface-treated steel sheet that has been subjected to a plating containing at least one of Al, Cr, Ni, Sn, Zn, Zr, Si, V, Ti and P and/or a chemical conversion treatment containing at least one of Si, V, Ti, Zr, P and Cr; and
the metallic plate of the case lid is a material based on any of a Ni-plated steel plate, a stainless steel plate or an aluminum plate.

2. (Deleted)

3. (After Amendment) The battery cell case according to claim 1, wherein the opening has a diameter of 0.5 mm or more and 10 mm or less.

4. (After Amendment) The battery cell case according to claim 1 or 3, wherein the case lid has a terminal hole for a positive electrode terminal and a terminal hole for a negative electrode terminal in addition to the opening.

5. (After Amendment) The battery cell case according to claim 1 or 3, wherein the metallic plate of the case lid is a material based on either a Ni-plated steel plate or a stainless steel plate, and
the case lid has a terminal hole for a positive electrode terminal in addition to the opening.

6. (After Amendment) The battery cell case according to claim 1 or 3, wherein the metallic plate of the case lid is a material based on either a stainless steel plate or an aluminum plate, and
the case lid has a terminal hole for a negative electrode terminal in addition to the opening.

7. (After Amendment) The battery cell case according to any one of claims 1, 3 to 4, wherein a film containing a polyolefinic resin as the main ingredient is laminated on the surface which serves as the inner surface of the case lid.

8. (After Amendment) The battery cell case according to any one of claims 1, 3 to 7, wherein the opening is closed and sealed by welding.

9. (After Amendment) A method for manufacturing a battery using the battery cell case according to any one of claims 1, 3 to 8, comprising the following steps:
inserting a battery element into the case body;
joining the case body and the case lid by seaming or welding;
injecting an electrolytic solution through the opening; and
electrolyzing and gasifying water in the electrolytic solution by precharging/discharging and releasing the water from the battery cell case; and
sealing the metal lid to the opening by welding.

Statement under Art. 19.1 PCT
1. Contents of Amendment

Claim 1 was amended by incorporating the subject matters of claim 2 into claim 1 and claim 2 was deleted. In addition, claims 3 to 9 were amended not to recite claim 2.

2. Explanation

The subject matters of claim 2, which subject matters are not included in Reference 1 were added into claim 1, and claim 2 was deleted. In addition, claims 3 to 9 were amended not to recite claim 2.
